# EUROPEAN PATENT SPECIFICATION

(11) **EP 0 438 805 B1**
(45) Date of publication and mention of the grant of the patent: **21.09.1994**
(21) Application number: 90125729.5
(22) Date of filing: 28.12.1990
(51) Int. Cl.: B65B 37/10, B65B 9/20, B65B 57/14

(54) **An apparatus for automatically feeding and packing surimi of fish or shellfish**
Vorrichtung zum automatischen Zuführen und Verpacken von "Surimi" von Fisch oder Krustazien
Appareillage automatique pour l'alimentation et l'emballage de "surimi" de poissons ou de crustacés

(30) Priority: 28.12.1989 JP 343415/89
(43) Date of publication of application: 31.07.1991
(73) Proprietor: NIPPON SUISAN KAISHA, LTD., Tokyo 100 (JP); ISHIDA IRON WORKS CO., LTD., Yaizu-shi, Shizuoka-ken (JP)
(72) Inventor: Takai, Hiroshi, Tama-shi, Tokyo (JP); Ishida, Sachio, Yaizu-shi, Shizuoka-ken (JP)
(74) Representative: Witte, Alexander, Dr.-Ing.

(56) References cited:
- DE-A- 3 625 191
- DE-U- 1 912 854
- GB-A- 854 088
- US-A- 4 007 577

## Description

Generally, immediately after being caught, fish or shellfish, such as Alaska pollak, Atkamacherel, Golden threadfin beam or the like, is subjected in sequence to steps, such as removing the non-edible portions therefrom to collect the edible portions only, bleaching the resultant edible portions by using water, removing the water contained in the bleached edible portions, thereby carrying out a preparation of surimi of fish or shellfish. The resultant surimi is divided into several units with a predetermined weight and then each unit is wrapped with wrapping materials, such as a plastic bag or the like.

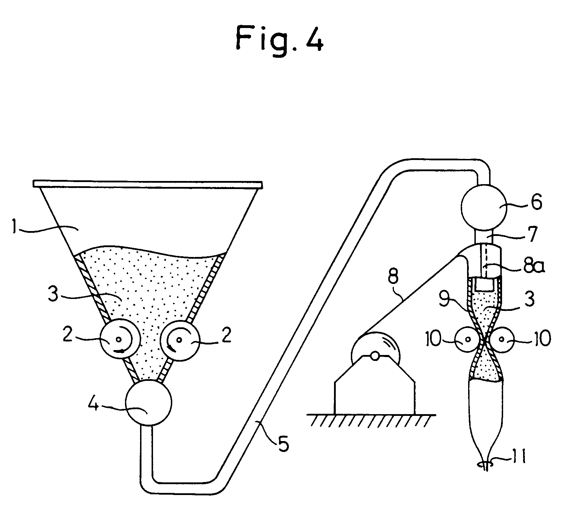

However, surimi with a structure comprised mainly of large and hard fibrous elements has not the required capability to flowing during the steps of dividing and wrapping thereof. Therefore, it is very difficult to effect a continuous and accurate division of surimi into units with a predetermned weight and then to wrap each unit with wrapping materials, i.e., a plastic bag, by utilizing a conventional dividing and wrapping machine, such as an automatic fish sausage making machine as shown in Fig. 4. Namely, as described above, surimi consists mainly of fibrous elements which result from chopping the edible portions of fish or shellfish by using a conventional chopper and thereafter bleaching them or removing the water from them. On the contrary, a meat paste of fish or shellfish results from a disolution of salt soluble protein contained in the edible portions of fish or shellfish, which disolution arises during kneading of the edible portions with salt.

Consequently, usage of the conventional automatic sausage making machine enables the continuous and accurate unit dividing and wrapping of the meat paste, because the meat paste is capable of flowing through the machine. On the contrary, by using a conventional automatic sausage making machine, it is impossible to continuously divide surimi into units each with constant weight and to wrap up each unit uniformly, respectively, due to the fact that surimi has little capability for flowing through the machine.

In detail, Fig. 4 shows an example of a conventional automatic sausage making machine for effecting a continuous and accurate dividing of meat paste of fish or shellfish, thereby automatically manufacturing a sausage of fish or shellfish.

The automatic sausage making machine comprises a hopper 1 having a conical shape. The hopper 1 has the lower portion connected to a pair of feeding rollers 2. Meat paste 3 is subjected to flow out by the pair of feed rollers 2 and to enter a suction pump 4. The suction pump 4 includes an outlet connected with a feed pipe 5. The feed pipe 5 has an upwardly extending portion, through which meat paste 3 is raised and then fed onto a feed pump 6. The feed pump 6 has an outlet connected with a nozzle 7. On the outer circumference of nozzle 7, a plastic film 8 is continuously supplied, so as to form an overlap portion 8a overlapping opposed marginal sides of the film 8. By heat sealing the overlap portion 8a, a wrapping tube 9 is formed, within which meat paste 3 is packed.

Underneath the nozzle 7, a pair of squeezing rollers 10 is disposed. A local squeeze of tube 9 by the squeezing rollers 10 forces out the meat paste 3 from the squeezed portion of tube 9, thereby forming empty portions without meat paste. Empty portions in sequence are sealed in a predetermined interval along the length-wise direction of the tube 9. Namely, the formation of each empty portion makes the division of meat paste into units each having a predetermined weight. Each empty portion is sealed with a wire clip 11 or the like, resulting in an automatically manufactured fish sausage comprising the wrapping tube 9 and the meat paste 3 packed therewithin.

Now, with packing surimi by using the automatic sausage making machine shown in Fig. 4, surimi must be subjected in sequence to steps, such as squeezing the wrapping tube 9 using rollers 10 to force the surimi from the squeezed portion of the wrapping tube 9 so as to form empty portions in sequence, and sealing each empty portion of the wrapping tube 9 with a wire clip 10, during which surimi flows out along a downward direction through the feed pump 6.

To this end, surimi has to be lifted from the bottom of the hopper 1 upto the top of the feed pump 6 via the feed tube 5, by using the suction pump 4.

However, the surimi does not necessarily flow through the feed tube 6, because the surimi has a structure comprising large and hard fibrous elements. Consequently, it can not easily be lifted up to the top of the feed pump 6, even by increasing the suction capacity of pump 4. Particularly, it is almost impossible to feed surimi with a constant density. Further, it is very difficult to completely force the surimi from the tube 9 by squeezing the wrapping tube 9 through a pair of squeezing rollers 10. Namely, due to an adherence of surimi to the inner wall surface of the squeezed portion of the wrapping tube 9 it is impossible to form empty portions in sequence along a line of the wrapping tube 9. In detail, owing to a contamination of the inner wall of the squeezed portion of a tube with surimi, the squeezed portion can not be sealed by heat sealing.

In view of the above, the inventors had proposed a horizonal type apparatus for wrapping and packing surimi to meet the characteristics of surimi, as described in Japanese Patent publication No. 35810/1986. The apparatus is shown in Fig. 5.

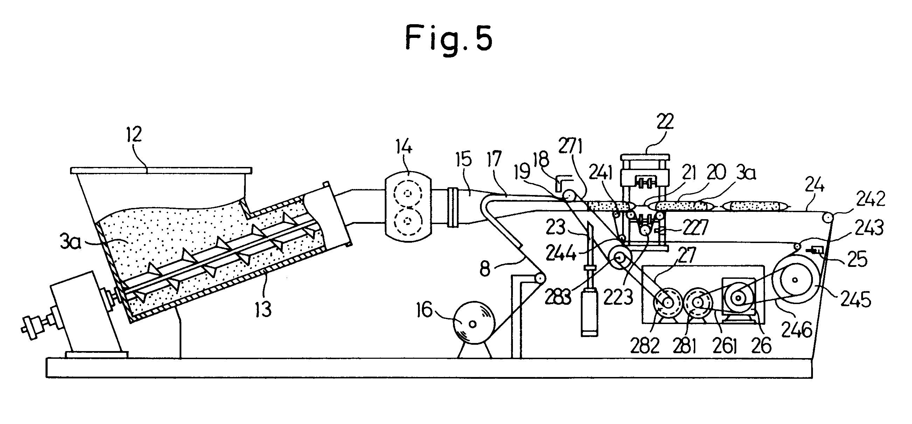

Referring to Fig. 5, a feed hopper 12 has a top portion to continuously supply surimi 3a. In the bottom of the feed hopper 12, a screw feeder 13 consisting of a pair of screws is disposed such that they extend obliquely upwards. The screw feeder 13 has an outlet connected with a gear pump 14.

The gear pump 14 has an exit connected with a forming tube 15. With the provision of the screw feeder 13, even if the gear pump 14 has a suction force insufficient to withdraw surimi 3a, it is liable to effect an entrance of surimi 3a to the gear pump 14 and sequent feeding of surimi 3a to the forming tube 15, by the aid of the screw feeder 13.

Surimi 3a is formed into a desired shape as it passes through the forming tube 15. A plastic film 8 is continuously supplied onto the outer periphery of the forming tube 15, on which it is continuously formed through a forming bar 17 into a wrapping tube. More specifically, the film 8 is rewound off a film roll 16, and as it proceeds along the forming bar 17, it is covered over on the outer periphery of forming tube 15, so as to form its overlap portion by overlapping opposed marginal sides thereof. The overlap portion (not shown) is sealed by a heat sealer 18, thereby forming a wrapping tube 20. The wrapping tube formed in this way is fed continuously by the feed roller 19. Surimi having a desired shape is packed into the wrapping tube 20 as it flows out from the exit of the forming tube 15. In this apparatus, a periodical driving of the gear pump 14 feeds the surimi 3a into the forming tube 15, and a periodical stopping of the gear pump 14 forms empty portions in sequence to be sealed on the wrapping tube 20. The empty portion 21 is cut and simultaneously heat sealed by the cutter/sealer 22. In this way, surimi 3a is divided into units each having a predetermined length, and also each unit is wrapped with the wrapping tube 20.

Adjacent to the outlet of the forming tube 15, a lower cutter 23, which can be raised and lowered, is provided beneath the top level of the forming tube 15. Any upper cutter corresponding to the lower cutter 23 is not provided. At the time of periodical stopping of the gear pump 14, the lower cutter 23 stops its raising motion when it reaches the top level of the forming tube, and then commences it's lowering motion. The lower cutter 23 has a cutting edge with a rounded portion on a tip thereof. Thus, when the lower cutter 23 reaches the top level of the forming tube 15, a downward force is applied to the rounded edge portion of the cutter 23 by the tension of the wrapping tube 20, such that surimi 3a can be cut into several units only, without cutting the wrapping tube 20.

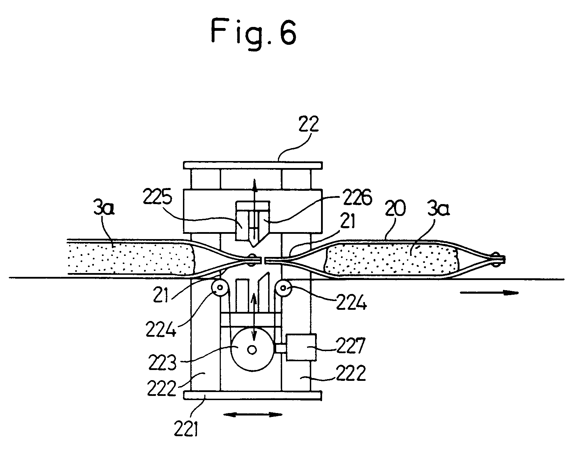

After the cutter 23, a feed conveyor 24 is provided, and the cutter/sealer 22 is detachably provided on the feed conveyor 24. In its starting position, the cutter/sealer 22 is secured to the feed conveyor 24 and sequently moved along with the feed conveyor 24 till it reaches the ending position. In its ending position, the cutter/sealer 22 is separated from the feed conveyor 24 and then returned to the starting position by an extention of a returning piston 25. Namely, as shown in Fig. 6, the cutter/sealer 22 comprises a reciprocal base 221, a pair of support posts 222, a central guide roller 223 and a pair of opposite side guide rollers 224. A heat sealer 225 and a cutter 226 are disposed between a pair of support posts 222 such that the heat sealer 225 and the cutter 226 can be raised and lowered, respectively. Further, a connecting element 227 for securing the cutter/sealing 22 to the feed conveyor 24 or for separating the cutter/sealer 22 from the conveyor 24 is provided. The feed conveyor 24 is passed through the central guide roller 223 and a pair of opposite side rollers 224. In the starting position, the cutter/sealer 22 is secured to the feed conveyor 24 by an engagement of the connecting element 227. When the cutter/sealer 22 reaches the ending position, by a disengagement of the connecting element 227, the cutter/sealer 22 is separated from the feed conveyor 24. At this instance, the cutter/sealer 22 is returned to the initial starting position by extension of the returning piston 25. While the cutter/sealer 22 is moved along with the feed conveyor 24 from the starting position to the ending position, the wrapping tube 20 is heat sealed by the upper and lower heat sealers 225 to form a sealing portion vertical to the length-wise direction thereof and then a portion adjacent to the sealing portion is cut by the cutter 226. The feed conveyor 24 is moved by guide rollers 241 to 244 and a drive roller 245, and the drive roller 245 is driven by a main drive motor 26, of which torque is transmitted to the feed roller 19, via a belt 261, a pair of gears 281 and 282, belt 27, a pulley 283 and a belt 271. The wrapping tube 20 is moved forwards by the feed roller 19.

With an apparatus having such a construction, there is not provided means for interconnecting the screw feeder 13 and the forming tube 15. Therefore, when an extreme drop of surimi feeding pressure applied by the screw feeder 13 results due to a decrease in surimi feeding rate by a reduction of the amount of surimi fed to the feed hopper 12, or when a fluctuation of the surimi feeding pressure applied by the screw feeder 13 causes, due to the other inevitable reasons, a mere control of a revolution rate of the gear pump 14 does not allow the formation of surimi with an uniform density through the forming tube 15 and also an accurate division of surimi into units each with a constant weight. This leads to fatal defects of the apparatus for automatically wrapping and packing surimi, because division of surimi into units each with the constant weight depends on the density of surimi to be fed to the gear pump 14.

Further, while surimi having fibrous structure is fed by the gear pump 14, it is subjected to a cutting of the fiber structure into small pieces and a meat portion of the surimi is kneaded into a paste material, thus greatly spoiling the character or the quality of surimi.

Furthermore, during a movement of the cutter/sealer 22 shown in Fig. 6 along with the feed conveyor 24, the wrapping tube 20 including a sequence of surimi units is heat sealed on its empty portion formed between adjacent surimi units, by a pair of heat sealers 225 and the resultant sealing portion forms a bottom portion for supporting a surimi unit. Following, the bottom portion is cut along its marginal edge by a pair of cutters 226, thereby resulting in a packing bag with an inlet thereof remaining opened. Therefore, each surimi unit can not be filled upto the inlet of the packing bag.

Finally, with the cutter/sealer 22, it is difficult to effect adequate controls of heat sealing and cutting of the wrapping tube 20, during a movement of the cutter/sealer 22 along with the feed conveyor 24. Especially, due to a lack of development of control means, it is impossible to effect, in practice, a wrapping and packing of surimi. with a high accuracy.

An object of the invention is to overcome the above disadvantages. Especially, the disadvantages are overcome by the provision of an apparatus for automatically feeding and packing surimi of fish or shellfish, in which a predetermined quantitiy of surimi is packed with high accuracy with a plastic film wrapping tube, using a feed hopper and a screw feeder. Namely, according to the invention, when the surimi pressure of surimi flowing out from the screw feeder and a particular level formed by the surface of the surimi occupying the feed hopper reaches a reference range, the feeding of surimi from the screw feeder commences, thereby achieving an automatic and accurate feeding and packing of the surimi.

The invention is predicated on the fact that for automatically and continously feeding surimi without spoiling the character thereof it is suitable to use as feed pump a volume type pump consisting of a pair of rotors in lieu of a gear pump. However, the volume type pump does not have a suction capacity sufficient to withdraw the surimi. Consequently, a screw feeder is provided for feeding surimi to the volume type pump.

Furthermore, to maintain a constant density of the surimi supplied to the volume type pump, the surimi pressure is detected at the inlet of the volume type pump, and the feed level of the surimi contained in the hopper is also detected, thereby maintaining the surimi pressure and the feed level within a constant level. Further, a communication chamber having a volume sufficient for maintaining a constant surimi density is provided betwen the inlet of the volume type pump and outlet of the screw feeder, and also a return path is formed in the screw feeder including two screws which mesh loosely with each other. When surimi pressure prevailing in the communication chamber is increased above a predetermined pressure, surimi is caused to flow back through the return path, thus maintaining a constant density in the communication chamber.

According to the invention, there is provided an apparatus according to claim 1 of the appended claims.

Furthermore, according to the invention, in the screw feeder, the return path causes surimi to flow back between two screws disposed with a deviation of 0.3 to 0.7 times a unit pitch of each screw. Even if the surimi pressure prevailing in the surroundings of the outlet of the screw feeder or the communication chamber is in excess of a predetermined range, the surimi flows back through the return path. Therefore, the surimi pressure prevailing in the communication chamber can always be maintained at a constant value.
Fig. 1 is a front view with sectional portions in part, showing an embodiment of a surimi processing apparatus according to this invention;
Fig. 2 is a plain view with sectional portions in part, showing the embodiment illustrated in Fig. 1;
Fig. 3 is a fragmentary enlarged-scale view showing a cutter/sealer shown in Figs. 1 and 2;
Fig. 4 is a front view with fragmentary portions in part, showing a conventional sausage making machine;
Fig. 5 is a front view with fragmentary portions in part, showing a conventional surimi processing apparatus; and
Fig. 6 is a fragmentary enlarged-scale view showing a cutter/sealer shown in Fig. 5.

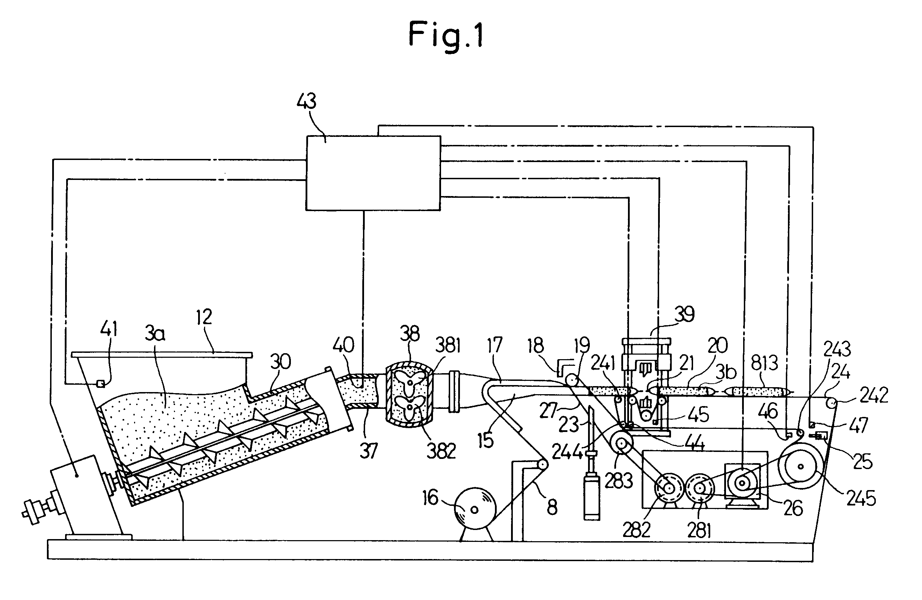

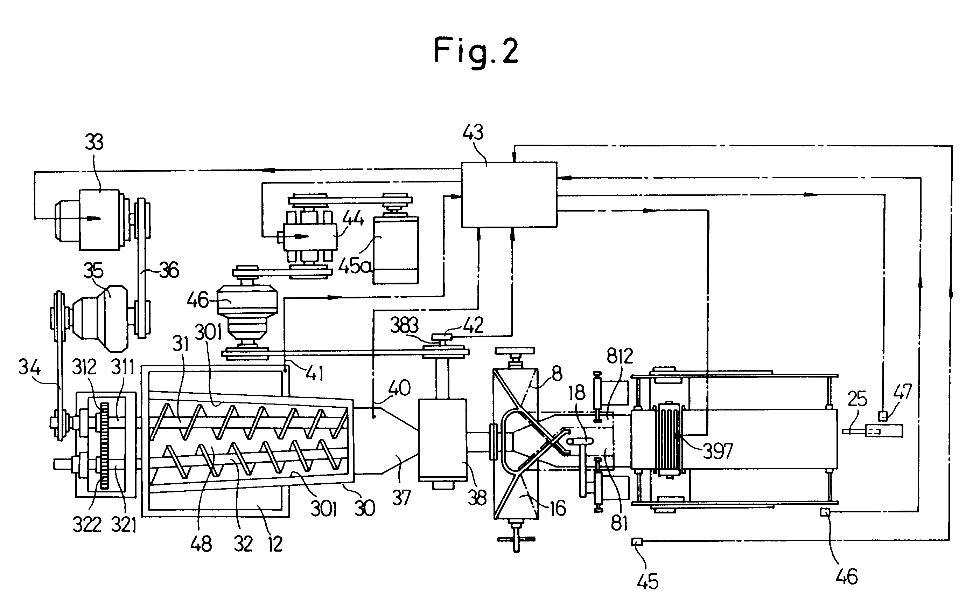

Referring to Fig. 1 and 2, like the prior art example shown in Fig. 5, reference numeral 3a designates a surimi, 8 a plastic film, 12 a feed hopper, 15 a forming tube, 16 a film winding roll, 17 a forming bar, 18 a heat sealer, 19 a feed roller, 20 a wrapping tube, 21 an empty portion, 23 a cutter, 24 a feed conveyor, 241 to 244 guide rollers, 245 a drive roller, 25 a returning piston, 26 a main drive motor, and 27 a belt.

In Figs. 1 and 2, the surimi 3a is fed into the feed hopper 12 from the top opening inlet thereof, and it is progressivly discharged from the bottom exit of the feed hopper 12. The screw feeder 30 consists of a pair of screws 31 and 32 provided in a bottom position of the feed hopper 12 such that they extends obliquely upwards. Screws 31 and 32 are rotated in opposite directions to each other by a drive motor 33. Namely, screw shafts 311 and 321 have respective gears 312 and 322 mounted on the rear end thereof. One gear 312 has a rotation shaft connected via a belt 34 to a speed reduction unit 35, which is in turn coupled via a belt 36 to the drive motor 33.

Screws 31 and 32 are arranged so as to form a loose mesh between screws 31 and 32. Thereby, a clearance between screws 31 and 32 forms a return path 48 as will be described hereafter in detail. While forming return path 48 between screws 31 and 32, screws 31 and 32 are mounted without any gap with respect to an inner wall 301 of the casing of the screw feeder 30, and an outlet of the screw feeder is connected with a communication chamber 37. With this construction, when the surimi pressure prevailing in the communication chamber 37 is increased above a reference range, surimi 3a fed by screws 31 and 32 flows backwards through the return path 48. In this way, surimi 3a flows through the communication chamber 37 with a constant density at all times, and consequently there does not exist the possibility of spoiling the character or the quality of the surimi.

The communication chamber 37, which is connected with the outlet of the screw feeder 30, has its leading end connected with a feed pump 38. The surimi 3a is supplied via the communication chamber 37 to the feed pump 38. The communication chamber 37 serves to connect the screw feeder 30 with the feed pump 38, and also to maintain a uniform density of the surimi 3a. To this end, the communication chamber 37 is constructed such that its capacity is sufficiently large for homogenizing the density of the surimi flowing through the communication chamber 37, in spite of a fluctuation of surimi pressure applied by the screw feeder 30.

However, an excessively large capacity of the communication chamber 37 spoils the feeding capability of the screw feeder 30 to permit feeding to the communication chamber 37. Therefore, the capacity of the connecting communication chamber 37 should be set within a range, such as not to cause spoiling of the feeding capability of the screw feeder 30.

Namely, surimi flowing out the feed hopper 12 enters the screw feeder 30, and then surimi is transfered to the communication chamber 37, by aid of the torque of screws 31 and 32. The surimi 3a stays for a certain time period in the communication chamber 37, for regulating the density of surimi 3a, thereby resulting in surimi with constant density. In other words, after a density regulation of surimi 3a in the communication chamber 37, surimi 3a with a constant density is fed to the feed pump 38. The feed pump 38 is not a gear pump, but a volume type pump with a pair of rotors 381 and 382 serving to feed surimi 3a in constant quantities. In detail, usage of the conventional gear pump causes a rupture of the fibrous structure constituting a characteristic of surimi 3a. In contrast to this, usage of the volume type pump does not cause any ruptures of the fibrous structure of surimi 3a, during feeding of surimi 3a, althouth the volume type pump has no capability of withdrawing surimi from the communication chamber 37.

Thus, the provision of the communication chamber 37 and the feed pump 38 makes it possible to feed the surimi 3a with a constant density to the inlet of the feed pump 38 and to flow out from the outlet of the feed pump 38.

A forming tube 15 is provided at the outlet side of the feed pump 38, in which the surimi is formed into a plate-like shape, while it flows along the overall lengh of the forming tube 15. The resultant plate-like shaped surimi is extruded out of an opening outlet of the forming tube 15. Plastic film 8, which is wound off of the film winding roll 16, is fed through the forming bar 17 onto the forming tube 15, with its wrapping up the outer periphery of the forming tube 15, so as to form an overlap portion 81 (shown in Fig. 2) by overlapping opposed marginal edges of the film 8.

The overlap portion 81 is heat sealed by the heat sealer 18, with an interposition of the overlap portion 81 between the heat sealer 18 and the outer periphery of the forming tube 15, thus forming a continuous wrapping tube 812. The wrapping tube 812 advances to the leading end of the forming tube 15 with the aid of the feed roller 19 disposed on the forming tube 15. The feed roller 19 is driven by the main drive motor 26 via a pair of gears 281 and 282, the pulley 283 and the belt 27. In this case, immediately after flowing out of the leading end of the forming tube 15, the plate-like surimi is continuously advancing beyond the leading end of the forming tube 15, and subsequently enters the wrapping tube 812, thereby wrapping up the plate-like shaped surimi with the wrapping tube 812. Adjacent to the leading end of the forming tube 15, a cutter 23 able to move upwardly and downwardly is provided. The cutter 23 has a cutting edge with a rounded portion on its tip. A moving path of the cutter 23, along which the cutter 23 moves upwardly and downwardly, is spaced by a small distance from the leading end of the cutter 23. Accordingly, the cutting edge of the cutter 23 moves upwardly and then has at its rounded portion an indirect contact with the plate-like surimi through the wrapping tube 12.

At this instance, the cutter 23 does not cut the wrapping tube 812, but cuts the plate-like surimi as it is being packed by the wrapping tube 812, into units 3b each with a predermined weight, thus achieving an accurate division of the plate-like surimi.

Adjacent to the leading end of the forming tube 15 a cutter/sealer 39 with a construction different from the prior art cutter/sealer shown in Fig. 6 is disposed.

The cutter/sealer 39 includes two heat sealing means 395 enabling a formation of two sealing portions on the wrapping tube 812 along two parallel lines each perpendicular to the length-wise direction of the wrapping tube 812, and cutting means 396 enabling a formation of cutting portion on the wrapping tube 812 at an area ranging between two parallel sealing portions. Additionally, the cutter/sealer 39 enables its continuous advancement by aid of the feed conveyor 24.

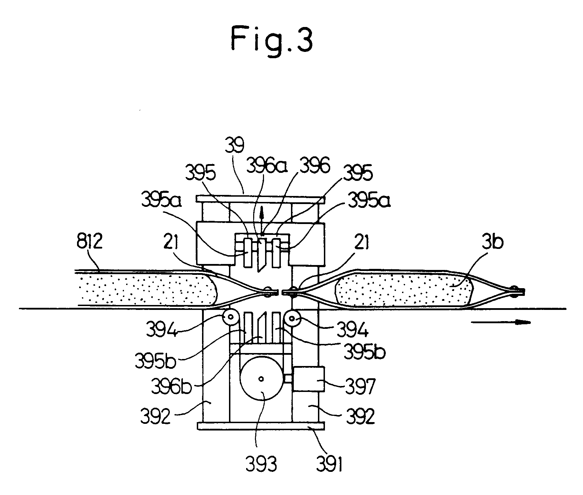

Referring to Figs. 6 and 3, the cutter/sealer 39 like the prior art example shown in Fig. 3, includes a reciprocal base 391, a pair of support posts 392, a central guide roller 392 and two guide rollers 394 each disposed on opposite sides of the roller 392. A pair of support posts 392 support two heat sealing means 395, respectively and cutting means 396 interposed therebetween. Each heat sealing means 395 includes upper and lower sealing elements 395a, and 395b opposed to each other, so that these elements can be raised and lowered towards or away from one another. Furthermore, like the heat sealing means 395, cutting means 396 includes upper and lower cutting elements 396a, and 396b opposed to each other, so that these cutting elements 396a, and 396b can be raised and lowered toward or away from one another. Consequently, the approach of heat sealing elements 395a and 395b of heat sealing means 395 causes the formation of two sealing portions on the wrapping tube 812, and also the approach of cutting elements 396a and 396b of cutting means 396 achieves either simultaneously or subsequently cutting of the wrapping tube 812 at the area ranging between two sealing portions.

When the cutter/sealer 39 is in the starting position adjacent to the leading end of the forming tube 15, the cutter/sealer 39 is connected to the feed conveyor 24 by an engagement of the connecting element 397 and as a result the cutter/sealer 39 is moved forwardly along with the feed conveyor 24. When the cutter/sealer 39 reaches the ending position adjacent to the trailing end of the apparatus, it is separated from the feed conveyor 24, by a disengagement of the connecting element 397 from the conveyor 24 and, as a result, the cutter/sealer 39 stops at the ending position.

At the ending position, a return piston 25 is activated to return the cutter/sealer 39 to its starting position.

In the apparatus having the above construction, the communication chamber 37 is provided with a pressure sensor 40, and the feed hopper 12 is provided with a level sensor 41. Furthermore, a shaft 383 of the feed pump 38 is provided with a pulse generator 42, such as a rotary encoder, or the like, which serves to detect the rotation rate of the feed pump 38 as a pulse signal from the pulse generator 38. The pulse signal from the pulse generator 42 is supplied to a control memory circuit 43. Both the pressure signal from the pressure sensor 40 and the level signal from the the level sensor 41 are supplied to the control memory circuit 43. In the case where surimi 3a with a constant density is fed from the communication chamber 37 to the feed pump 38, the feeding rate of surimi 3a can be regulated according to the rotation rate of the feed pump 38, due to the fact that the feed pump 38 is constructed as a volume type pump. Thus, the feeding rate of surimi 3a can be detected as the pulse signal from the pulse generator 42. Furthermore, the extent to which the surimi is fed to the communication chamber 37 can be obtained by the detection of the pressure signal from the pressure sensor 40, while the detection of the level signal from level sensor 41 obtains the surimi feeding level in the feed hopper 12.

In the apparatus including the pressure sensor 40, the level sensor 41 and the pulse generator 42, when the level signal reaches a reference level having a constant value and simultaneously the pressure signal is in a reference range, the control memory circuit 43 provides an operation command signal to the drive motor 33 serving to feed surimi 3a from the screw feeder 30 to the communication chamber 37. Simultaneously, the periodical on-off operation of the clutch brake 44 causes an intermittent driving of the feed pump 38. Thus, intermittent driving of the feed pump 38 causes surimi 3a to flow out in a predetermined quantity into the forming tube 15. Surimi flowing out from the forming tube 15 is inserted into the wrapping tube 812, which is formed on the outer periphery of the forming tube 15, and a surimi unit with predetermined weight is packed with the wrapping tube 812.

The on-off operation of the feed pump 38 may be carried out in any way. In a preferable embodiment, the drive motor 45a is connected via the clutch brake 44 with the speed reduction unit 46a, and the on-off operation of the clutch brake 44 is achieved by the operation command signal from the control memory circuit 43. Namely the control memory circuit 43 counts pulses from the pulse generator 42 serving to detect a rotation rate of the feed pump 38 as a pulse signal. When the rotation rate of the feed pump 38 reaches a predetermined rotation rate, the control memory circuit 43 provides an "off" signal to the clutch brake 44. In this case, when a pulse signal corresponding to rotation rate of the feed pump 38, reaches a predetermined rotation rate, the control memory circuit 43 provides an "off" signal to the clutch brake. The clutch brake 44 serves to cut off the driving torque transmitted without intermittence by the drive motor 45a. The cut-off action causes the transmission of the rotation torque from speed reduction unit 46a to the feed pump 38 to stop. After a lapse of a predetermined period of time, the control memory circuit 43 supplies an "on" signal to the clutch brake 44. As a result, by action of the clutch brake 44, the transmission of the rotation torque of the drive motor 45a to the feed pump 38 commences. As described above, accurate division of surimi 3a into units 3b each with constant weight can be carried out by the feed pump 38 serving to rotate within a predeterminded period. Such intermittent rotation of the feed pump 38 is generated when the pressure signal representing the surimi pressure prevailing in the communication chamber 37 is in a reference range and at same time the level signal representing the feeding level formed by the surface of surimi occupied in the feed hopper 12 is above a predetermined level. However, when the pressure signal gets out of the reference range or when the level signal is below a predetermined level, at least the clutch brake 44 is actuated by an operation command signal from the control memory circuit 43 so as to stop the transmission of the rotation torque from the drive motor 45a to the feed pump 38. More specifically, when the pressure signal is outside the reference range and the level signal represents a level below the reference level, the operation command signal representing an a stop signal is supplied from the control memory 43 to the drive motor 45a and the clutch brake 44, thereby stopping the operation of the screw feeder 30 and the feed pump 38. Furthermore, when the pressure signal is within the reference range even if the level signal becomes below the reference level, the screw feeder 30 and the feed pump 38 are continuously operated to continue feeding the surimi 3a from the screw feeder 30 to the communication chamber 37, while surimi is intermittently fed from the feed pump 38 to the forming tube 15.

On the contrary, when the pressure signal gets out of the reference range, even if the level signal is above a reference level, the control memory circuit 43 supplies an "off" signal to the clutch brake 44 to stop surimi feeding by the feed pump 38, while the surimi feeding from the screw feeder 30 to the communication chamber 37 continues. Thus, the continuation of the surimi feeding from the screw feeder 30 causes the pressure signal of the communication chamber 37 to reach a level within the reference range. At this instance, the surimi feeding by the feed pump 38 is resumed.

Namely, when a fluctuation of the density of surimi supplied by the screw feeder 30 to the communication chamber 37 occurs due to a variation of the amount of surimi to be fed to the communication chamber 37 and a consequent variation of the surimi pressure prevailing in the screw feeder 30, or when the feeding level of the feed hopper 12 falls down below the reference level, there arises an idle rotation of at least one of the two screws 31 and 32 and also a consequent transportation of surimi aggregated as a mass to the communication chamber 37. The aggregated surimi can not be homogenized by the communication chamber 37 in spite of its stay for a while in the communication chamber 37, and as a result the feeding of homogeneous surimi to the feed pump 38 can not be carried out. Accordingly, in this case, the mere control of rotation of the feed pump 38 does not enable an accurate division of surimi into units having a constant weight. Even in this case, however, some instance of maintaining the pressure signal from the communication chamber 37 within a reference range indicates in the communication chamber 37 a remainder of homogeneous surimi with uniform density. At this instance, the feed pump 38 is continuously operated for a while and also a remedy for a rapid increase in the feeding rate of surimi to be fed to the feed hopper 12 is taken, thereby preventing the pressure signal of the communication chamber 37 from falling down below a reference range. Even with such a remedy treatment, when a shortage of the surimi in the communication chamber 37 results in the fall of the pressure signal representing the surimi pressure prevailing in the communication chamber 37, the pressure signal gets out of the reference range, and the control memory circuit 43 supplies an "off" signal to the clutch brake 44 to stop the surimi feeding by the feed pump 38.

On the other hand, even if the level signal from the feed hopper 12 is within the reference range, there arises a fluctuation of the density of surimi 3 existing in the communication chamber 37 on such occasion that the pressure signal representing the surimi pressure in the communication chamber 37 gets out of the reference range.

Accordingly, in this case, the surimi flowing out from the feed pump 38 has not a homogeneous density, and consequently it can not be divided with high accuracy into units 3b each of a constant weight, by mere control of the rotation rate and the period of driving the feed pump 38. Accordingly, at this case, the control memory circuit 43 serves to supply an "off" signal to the clutch brake 44 to stop the surimi feeding of the feed pump 38.

Additionally, it is important that the density of surimi 3a passing through the communication chamber 37 is maintained within a predetermined range. In the case, such that the amount of surimi to be fed by the screw feeder 30 is in excess of an amount of surimi to be fed by the feed pump 38, there results an extreme concentration of the surimi 3a during passing through the communication chamber 37 and a consequent spoiling of fibrous structure included in the surimi 3a. For this reason, the screw feeder 30 has a construction such that surimi 3a is permitted to return from the communication chamber 37 to the screw feeder 30 on the occurence of an increase in the surimi pressure prevailing in the chamber 37 beyond the reference range. The surimi returning means may be constructed by providing a separate return path bridged between the communication chamber 37 and the screw feeder 30. Alternatively, a return path may be formed by a gap defined between each of screws 31 and 32 and the inner wall surface 301 of the casing of screw feeder 30. The former return path causes a complication of its construction and does not enable the regulation of all of the surimi pressure prevailing in communication chamber 37. Further, the latter return path causes a reduction of the feeding capability of screw feeder 30 and an adherence of surimi 3a to the inner wall surface 301 of the casing of the screw feeder 30.

For this reason, according to this invention, a pair of screws 31 and 32 are provided with a loose mesh relation to each other. The return path 48 is formed between two screws 31 and 32 and it is related to the pitches of two screws 31 and 32. For example, if each pitch of the screws 31 and 32 is set to 150 ± 10mm, two screws 31 and 32 are disposed with a deviation of approximately 0.3 to 0.7 times the unit pitch thereof. Thereby, the return path 48 is formed between two screws 31 and 32. This is because if the deviation is beyond the range of 0.3 to 0.7 times the unit pitch, the function of the return path can not be sufficiently fulfilled and surimi 3a can not be uniformly fed by screw feeder 30. More specifically, where the feed pump 38 is constructed as a volume type pump consisting of a pair of rotors, surimi withdrawal force of the volume type pump is further reduced, compared to the prior art gear pump. For this reason, a surimi feeding capacity of the screw feeder is maintained within a certain range. If the surimi pressure prevailing in communication chamber 37 is detected and then increased beyond the reference range, a reverse flow of surimi through the return path 48 between two screws 31 and 32 results to maintain the surimi pressure prevailing in communication chamber 37 within the refrence range. More specifically, if the surimi pressure prevailing in communication chamber 37 exceeds a reference range or reaches the upper limit thereof, surimi 3a being fed by two screws 31 and 32 of screw feeder 30 does not enter the communication chamber 37 but flows back for a while through the return path 48 between the two screws 31 and 32. On the other hand, when surimi 3a flows out from communication chamber 37 to the feed pump 38 so that the surimi pressure prevailing in the communication chamber 37 is reduced by a certan extent from the upper limit of the reference range, surimi 3a begins to be fed into the communication chamber 37 in correspondence to the reduction.

Furthermore, in order to detect the starting and ending positions of the cutter/sealer 39, a starting position sensor 45 and an ending position sensor 46 are provided. These sensors 45 and 46 are constructed as sensor switches with their output terminals connected to the control memory circuit 43. When the starting and ending positions of the cutter/sealer 39 are detected respectively by sensors 45 and 46, each of the detection signals is supplied to the control memory circuit 43. Furthermore, the output side of the connecting element 397 for connecting and disconnecting the cutter/sealer 39 to the feed conveyor 24 and a pneumatic valve 47 for operating the return piston 25 are connected to the control memory circuit 43.

When the cutter/sealer 39 is returned by the returning piston 25 to its starting position, the sensor 45 detects this position to provide a detection signal. As a result, the control memory circuit 43 provides an operation signal to the connecting element 397 to operate the same. The cutter/sealer 39 is moved forwards along with the feed conveyor 24. Furthermore, when the cutter/sealer 39 is moved forwardly to reach the ending position, this position is detected by the sensor 46. As a result, the control memory circuit 43 provides a signal to operate the connecting element 397 and returning piston 25. The cutter/sealer 39 is separated from the feed conveyor 24 and then returned to the starting position by the returning piston 25.

## Claims

1. An apparatus for automatically feeding and packing surimi (3a) of fish or shellfish, comprising a feed hopper (12) including a top inlet for feeding said surimi (3a) thereto and a bottom outlet for discharging said surimi (3a) therefrom, a screw feeder (30) serving to convey said surimi (3a) discharged from said bottom outlet of said feed hopper (12) along an axial direction of said screw feeder (30), said screw feeder (30) being provided with two screws (31, 32) rotating in opposite directions to each other, a feed pump (38) for feeding a predetermined quantity of surimi (3a) flowing out from an outlet of said screw feeder (30), a communication chamber (37) disposed between said screw feeder (30) and said feed pump (38), a forming tube (15) for forming said surimi (3a) into a desired shape thereof, said surimi (3a) flowing out from an exit of said feed pump (38), and a wrapping tube forming means for forming a plastic film (8) into a continuous wrapping tube (812) serving for packaging said surimi (3a), characterized by
a pressure gauge (40), disposed at said communication chamber (37), for detecting a surimi pressure prevailing in said communication chamber (37);
a level gauge (41), disposed at said feed hopper (12), for detecting a feed level formed by a surface of said surimi (3a) occupying said feed hopper (12);
control means (43) for supplying a driving signal to said feed pump (38) only when said level gauge (41) detects said feed level greater than a reference level and simultaneously said pressure gauge (41) detects said surimi pressure in excess of a reference pressure; and
a return path (48) formed between said two screws (31, 32) of said screw feeder (30).

2. The apparatus according to claim 1, characterized in that said return path (48) is formed between said two screws (31, 32) disposed in a loose mesh relation with each other.

3. The apparatus according to claims 1 or 2, characterized in that said return path (48) is formed between said two screws (31, 32) disposed with a deviation of 0.3 to 0.7 times a unit pitch of each of said two screws (31, 32).

4. The apparatus according to anyone of claims 1 through 3, characterized in that said feed pump (38) is connected through a clutch brake (44) to a drive motor (45a), and while said feed pump (38) is provided with a rotary encoder (42) for detecting a revolving rate of said feed pump (38), said revolving rate is counted by said control means (43), and upon reaching of a reference revolving rate by said revolving rate, said control means (43) supplies a signal to drive said clutch brake (44), thereby disconnecting said drive motor (45a) from said feed pump (38).

5. The apparatus according to anyone of claims 1 through 4, characterized in that said apparatus further comprises cutting means (23), disposed adjacent to a leading end of said forming tube (15), for cutting said surimi (3a) having thereafter a desired shape, thereby forming surimi units without cutting said wrapping tube (812), so as to form a gap between two consecutive surimi units having no surimi therebetween;
a feed conveyor (24) for continuously advancing forward the wrapping tube (812) along with said surimi units therein;
a cutter/sealer (39) for cutting and simultaneously sealing a portion of said wrapping tube (812), which corresponds to said gap, during said cutter/sealer (39) advances along with said feed conveyor (24);
connecting means (227) for connecting or disconnecting said cutter/sealer (39) with said feeding conveyor (24), and
at least two sensor elements (45, 46) for detecting respectively a starting position and an ending position of said cutter/sealer (39) reciprocating therebetween, one sensor element (46) serving to detect a time for said cutter/sealer (39) to reach said ending position and to instantaneously output a first detecting signal to said control means (43), thereby actuating through said control means (43) a return of said cutter/sealer (39) to said starting position, a second sensor element (45) serving to detect a time for said cutter/sealer (39) to reach said starting position and to instantaneously output a second detecting signal to said control means (43), thereby actuating through said control means an advancement of said cutter/sealer (39) towards said ending position.

6. The apparatus according to claim 5, characterized in that said cutting means (23) is disposed beneath said leading end of said forming tube (15), and said cutting means (23) is provided with a lower cutter, whose edge is able to reach a horizontal line extending over from a top level of said forming tube (15).

7. The apparatus according to claims 5 or 6, characterized in that said connecting means (227) are constructed so as to be connected with said feed conveyor (24) by a command signal fed from said control means (43) immediately after supplying said first signal to said control means (43).

8. The apparatus according to anyone of claims 5 through 7, characterized in that said cutter/sealer (39) comprises sealing means (396, 396a, 396b) and a pair of cutting means (395, 395a, 395b) disposed at opposite sides of said sealing means (396, 396a, 396b).

## Patentansprüche

1. Vorrichtung zum automatischen Zuführen und Verpacken von Surimi (3a) von Fischen oder Schalentieren, mit einem Zuführtrichter (12), der einen oberen Einlaß zum Einbringen von Surimi (3a) in denselben und einen bodenseitigen Auslaß zum Entnehmen von Surimi (3a) aus demselben aufweist, mit einem Schneckenförderer (30), der dazu dient, das vom bodenseitigen Auslaß des Zuführtrichters abgeführte Surimi (3a) längs einer axialen Richtung des Schneckenförderers (30) zu fördern, wobei der Schneckenförderer (30) mit zwei Schnecken (31, 32) versehen ist, die in entgegengesetzten Richtungen zueinander drehen, mit einer Förderpumpe (38) zum Fördern einer vorbestimmten Menge an Surimi (3a), die aus einem Auslaß des Schneckenförderers (30) fließt, mit einer zwischen dem Schneckenförderer (30) und der Förderpumpe (38) angeordneten Verbindungskammer (37), mit einem Formrohr (15) zum Formen des Surimi (3a) in eine gewünschte Form, wobei das Surimi (3a) aus einem Auslaß der Förderpumpe (38) strömt, und mit Mitteln zum Bilden eines Verpackungsschlauches, die eine Kunststoffolie (8) in einen kontinuierlichen Verpackungsschlauch (812) formen, der zum Verpacken des Surimi (3a) dient, gekennzeichnet durch einen in der Verbindungskammer (37) angeordneten Druckmesser (40) zum Erfassen des in der Verbindungskammer (37) vorherrschenden Surimidruckes; ferner durch einem am Zuführtrichter (12) angeordneten Füllstandmesser (41), um den durch eine Oberfläche des im Zuführtrichter (12) vorhandenen Surimi (3a) gebildeten Füllstandes zu erfassen; ferner durch Steuermittel (43), um der Förderpumpe (38) ein Antriebssignal zu geben, und zwar nur dann, falls der Füllstandmesser (41) feststellt, daß der Füllstand höher als ein Referenz-Füllstand ist und gleichzeitig der Druckmesser (40) feststellt, daß der Surimidruck einen Referenzdruck überschritten hat; und ferner durch einen zwischen den beiden Schnecken (31, 32) des Schneckenförderers (30) gebildeten Rückflußweg (48).

2. Vorrichtung nach Anspruch 1, dadurch gekennzeichnet, daß der Rückflußweg (48) zwischen den beiden sich in einem lose ineinandergreifenden Zusammenhang untereinander stehenden beiden Schnecken (31, 32) ausgebildet ist.

3. Vorrichtung nach Anspruch 1 oder 2, dadurch gekennzeichnet, daß der Rückflußweg (48) zwischen den beiden Schnecken (31, 32) gebildet ist, die bezüglich einer Teilungseinheit der beiden Schnecken (31, 32) um das 0,3- bis 0,7-fache dieser Teilung voneinander abweichend angeordnet sind.

4. Vorrichtung nach einem der Ansprüche 1 bis 3, dadurch gekennzeichnet, daß die Förderpumpe (38) über eine Kupplungsbremse (44) mit einem Antriebsmotor (45a) verbunden ist, und daß die Förderpumpe (38) mit einer Drehzahlkodiereinheit (42) zum Erfassen der Drehzahl der Förderpumpe (38) versehen ist, wobei die Drehzahl von den Steuermitteln (43) gezählt wird, und, falls die Drehzahl eine Referenzzahl erreicht, erzeugen die Steuermittel (43) ein Signal zum Antreiben der Kupplungsbremse (44), wodurch der Antriebsmotor (45a) von der Förderpumpe (38) gelöst wird.

5. Vorrichtung nach einem der Ansprüche 1 bis 4, dadurch gekennzeichnet, daß die Vorrichtung ferner folgendes aufweist, nämlich Auftrennmittel (23), die benachbart zum vorderen Ende des Formrohres (15) angeordnet sind, um das Surimi (3a) aufzutrennen, das daraufhin eine gewünschte Form einnimmt, wodurch Portionen an Surimi gebildet werden, ohne daß dabei der Verpackungsschlauch (812) durchgetrennt wird, so daß zwischen zwei aufeinanderfolgenden Portionen Surimi ein Zwischenraum ohne Surimi gebildet wird;
ein Förderband (24) zum kontinuierlichen Vorwärtsbewegen des Verpackungsschlauches (812) samt den darin enthaltenen Portionen an Surimi;
eine Schneide/Siegel-Einheit (39) zum Schneiden und gleichzeitigen Versiegeln eines dem Zwischenraum entsprechenden Abschnittes des Verpackungsschlauches (812), und zwar während die Schneide/Siegel-Einheit (39) sich zusammen mit dem Förderband (24) längs desselben bewegt; Verbindungsmittel (227) zum Verbinden oder Lösen der Schneide/Siegel-Einheit (39) mit oder vom Förderband (24), und
zumindest zwei Sensorelemente (45, 46) zum Erfassen einer Ausgangsstellung und einer Endstellung der sich zwischen diesen beiden hin- und herbewegenden Schneide/Siegel-Einheit (39), wobei ein Sensorelement (46) dazu dient, einen Zeitpunkt zu erfassen, zu dem die Schneide/Siegel-Einrichtung (39) die Endstellung erreicht und dann unmittelbar ein erstes Detektionssignal den Steuermitteln (43) sendet, wodurch dann durch die Steuermittel (43) ein Rückkehren der Schneide/Siegel-Einheit (39) in die Ausgangsstellung veranlaßt wird, wobei das zweite Sensorelement (45) dazu dient, einen Zeitpunkt zu erfassen, zu dem die Schneide/Siegel-Einheit (39) die Ausgangsstellung erreicht und dann unmittelbar den Steuermitteln (43) ein zweites Detektionssignal sendet, wonach durch die Steuermittel ein Bewegen der Schneide/Siegel-Einheit (39) in Richtung der Endstellung bewerkstelligt wird.

6. Vorrichtung nach Anspruch 5, dadurch gekennzeichnet, daß die Auftrennmittel (23) unterhalb des vorderen Endes des Formrohres (15) angeordnet sind, und daß die Auftrennmittel (23) mit einem unteren Trennelement versehen sind, dessen Kante eine horizontale Linie erreichen kann, die sich oberhalb eines obersten Niveaus des Formrohres (15) erstreckt.

7. Vorrichtung nach Anspruch 5 oder 6, dadurch gekennzeichnet, daß die Verbindungsmittel (227) derart ausgebildet sind, daß sie durch ein von den Steuermitteln (43) erzeugtes Steuersignal, unmittelbar nachdem das erste Signal den Steuermitteln (43) zugeführt wurde, mit dem Förderband (24) verbunden werden.

8. Vorrichtung nach einem der Ansprüche 5 bis 7, dadurch gekennzeichnet, daß die Schneide/Siegel-Einheit (39) Siegelmittel (396, 396a, 396b) und ein Paar an Schneidemitteln (395, 395a, 395b) aufweist, wobei letztere beidseits der Siegelmittel (396, 396a, 396b) angeordnet sind.

## Revendications

1. Appareil servant à amener et à emballer automatiquement des surimis (3a) de poisson ou de crustacé, comprenant une trémie d'amenée (12), comprenant une entrée supérieure servant à amener ledit surimi (3a) à cette dernière, et une sortie inférieure servant à évacuer ledit surimi (3a) depuis cette dernière, un organe d'amenée à vis (30) servant à transporter ledit surimi (3a) évacué depuis ladite sortie inférieure de ladite trémie d'amenée (12) dans une direction axiale dudit organe d'amenée à vis (30), ledit organe d'amenée à vis (30) étant pourvu de deux vis (31, 32) tournants dans des sens opposées entre eux, une pompe d'amenée (38) servant à amener une quantité prédéterminée de surimi (3a) s'écoulant depuis une sortie dudit organe d'amenée à vis (30), une chambre de communication (37) disposée entre ledit organe d'amenée à vis (30) et ladite pompe d'amenée (38), un tube de formage (15) servant à former ledit surimi (3a) dans sa forme souhaitée, ledit surimi (3a) s'écoulant depuis une sortie de ladite pompe d'amenée (38), et un moyen formant tube d'enroulement servant à conférer à un film plastique (8) la forme d'un tube d'enroulement (812) continu, servant à emballer ledit surimi (3a), caractérisé par
une jauge de pression (40), disposée sur ladite chambre de communication (37), servant à mesurer la pression de surimi régnant dans ladite chambre de communication (37);
une jauge de niveau (41), disposée au niveau de ladite trémie d'amenée (12), servant à mesurer le niveau d'amenée, formé par une surface dudit surimi (3a) occupant ladite trémie d'amenée (12);
un moyen de commande (43) servant à fournir un signal de commande à ladite pompe d'amenée (38), seulement lorsque ladite jauge de niveau (41) détecte que ledit niveau d'amenée est supérieure à un niveau de référence et que, simultanément, ladite jauge de pression (41) détecte que ladite pression de surimi est supérieure à une pression de référence; et un chemin de retour (48) formé entre lesdites deux vis (31, 32) dudit organe d'amenée à vis (30).

2. Appareil selon la revendication 1, caractérisé en ce que ledit chemin de retour (48) est formé entre lesdites deux vis (31, 32) disposées avec un jeu d'engrènement l'une par rapport à l'autre.

3. Appareil selon la revendication 1 ou 2, caractérisé en ce que ledit chemin de retour (48) est formé entre lesdites deux vis (31, 32), disposées avec une déviation de 0,3 à 0,7 fois une unité de pas de chacune desdites deux vis (31, 32).

4. Appareil selon l'une quelconque des revendications 1 à 3, caractérisé en ce que ladite pompe d'amenée (38) est reliée, par un frein d'embrayage (44), à un moteur d'entraînement (45a) et, tandis que ladite pompe d'amenée (38) est pourvue d'un codeur rotatif (42) servant à détecter la vitesse de rotation de ladite pompe d'amenée (38), ladite vitesse de rotation est mesurée par ledit moyen de commande (43) et, lorsqu'une vitesse de rotation de référence est atteinte par ladite vitesse de rotation, ledit moyen de commande (43) fournit un signal servant à entraîner ledit frein d'embrayage (44), de manière à déconnecter ledit moteur d'entraînement (45a) par rapport à ladite pompe d'amenée (38).

5. Appareil selon l'une quelconque des revendications 1 à 4, caractérisé en ce que ledit appareil comprend en outre un moyen de coupe (23), disposé de manière adjacente à une extrémité avant dudit tube de formage (15), servant à découper ledit surimi (3a) présentant ensuite une forme souhaitée, de manière à former des ensembles de surimi sans découper ledit tube d'emballage (812), en vue de former un interstice entre deux unités de surimi successives ne présentant aucun surimi entre elles;
un transporteur d'amenée (24) servant à faire avancer de façon continue en avant le tube d'emballage (812), conjointement avec lesdites unités de surimi montées en son sein;
un organe de coupe/scellage (39) servant à découper et à sceller simultanément une partie dudit tube d'emballage (812), qui correspond audit interstice, pendant que ledit organe de coupe/scellage (39) avance conjointement avec ledit transporteur d'amenée (24);
un moyen de connexion (227) servant à connecter ou à déconnecter ledit organe de coupe/scellage (39) par rapport audit transporteur d'amenée (24), et
au moins deux éléments capteurs (45, 46) servant à détecter respectivement une position de début et une position de fin dudit organe de coupe/scellage (39) se déplaçant en va-et-vient entre eux, un élément capteur (46), servant à détecter le moment ou ledit organe de coupe/scellage (39) atteint ladite position de fin et à produire instantanément un premier signal de détection vers ledit moyen de commande (43), de manière à actionner, par l'intermédiaire dudit moyen de commande (43), un mouvement de retour dudit organe de coupe/scellage (39) vers ladite position de début, un second élément capteur (45) servant à détecter le moment ou ledit organe de coupe/scellage (39) atteint ladite position de début et à produire instantanément un second signal de détection vers ledit moyen de commande (43), de manière à actionner, par l'intermédiaire dudit moyen de commande, une avancée dudit organe de coupe par scellage (39) vers ladite position de fin.

6. Appareil selon la revendication 5, caractérisé en ce que ledit moyen de coupe (21) est disposé au-dessous de ladite extrémité avant dudit tube de formage (15), et ledit moyen de coupe (23) est pourvue d'une lame inférieure, dont le bord peut atteindre une ligne horizontale s'étendant depuis un niveau supérieur dudit tube de formage (15).

7. Appareil selon la revendication 5 ou 6, caractérisé en ce que lesdits moyens de connexion (227) sont construits de manière à être connectés audit transporteur d'amenée (24) au moyen d'un signal de commande fournit par ledit moyen de commande (43), immédiatement après avoir fournit ledit premier signal de commande audit moyen de commande (43).

8. Appareil selon l'une quelconque des revendications 5 à 7, caractérisé en ce que ledit organe de coupe/scellage (39) comprend des moyens de scellage (396, 396a, 396b) et un couple de moyens de coupe (365, 395a, 395b), disposés sur les cotés opposés desdits moyens de scellage (396, 396a, 396b).
